Europäisches Patentamt

**European Patent Office**

Office européen des brevets

(11) Veröffentlichungsnummer: **0 292 817**

**A2**

(12) **EUROPÄISCHE PATENTANMELDUNG**

(21) Anmeldenummer: **88107771.3**

(22) Anmeldetag: **14.05.88**

(51) Int. Cl.⁴: **H04L 25/22**

(30) Priorität: **27.05.87 DE 3718001**

(43) Veröffentlichungstag der Anmeldung:
**30.11.88 Patentblatt 88/48**

(84) Benannte Vertragsstaaten:
**BE CH DE FR GB IT LI LU NL**

(71) Anmelder: **Richard Hirschmann**
**Radiotechnisches Werk**
**Richard-Hirschmann-Strasse 19 Postfach**
**110**
**D-7300 Esslingen a.N.(DE)**

(72) Erfinder: **Ludolf, Wilhelm, Dr.**
**Bärbelesweg 9**
**D-7440 Nürtingen-Hardt(DE)**
Erfinder: **Schmid, Bernhard**
**Silberburgstrasse 185**
**D-7000 Stuttgart 1(DE)**
Erfinder: **Schenkyr, Rainer**
**Römerstrasse 15**
**D-7316 Köngen(DE)**

(74) Vertreter: **Stadler, Heinz, Dipl.-Ing.**
**Richard-Hirschmann-Strasse 19 Postfach**
**110**
**D-7300 Esslingen a.N.(DE)**

(54) **Schaltungsanordnung zur Erzeugung bipolarer digitaler Datensignale.**

(57) Bei der Schaltungsanordnung zur Erzeugung bipolarer ditialer Datensignale aus unipolaren Datensignalen ist eine Schalterkombination vorgesehen, die in Abhängigkeit der unipolaren Digitalsignale den Schaltungsausgang mit dem positiven oder dem negativen Anschluß einer unipolaren Spannungsquelle verbindet. Auf diese Weise ergibt sich für die Erzeugung bipolarer digitaler Datensignale aus unipolaren Digitalsignalen ein sehr einfacher - schaltungstechnischer Aufbau ohne die Erfordernisse von Pegelumsetzern oder Spannungswandlern. Darüberhinaus ist die Verlustleistung einer derartigen Schaltungsanordnung sehr klein. Vorzugsweise besteht die Schalterkombination aus Invertern. Für große Leistungen sind die Inverter mit komplementären Feldeffekttransistoren aufgebaut.

Fig. 5

## Schaltungsanordnung zur Erzeugung bipolarer digitaler Datensignale

Die Erfindung betrifft eine Schaltungsanordnung zur Erzeugung bipolarer digitaler Datensignale mit einer vom Bezugspotential galvanisch getrennten, unipolaren Spannungsquelle und mit einer von der unipolaren Spannungsquelle gespeisten digitalen Signalquelle.

Insbesondere bei der Datenübertragung werden bipolare digitale Datensignale gegenüber unipolaren digitalen Datensignalen deshalb vorgezogen, weil die Störempfindlichkeit bipolarer Digitalsignale wesentlich geringer als bei unipolaren Digitalsignalen ist. Dies ist darauf zurückzuführen, daß der Spannungsunterschied zwischen den positiven und negativen Impulsen bipolarer Datensignale größer ist. Darüberhinaus tragen auch die unterschiedlichen Spannungsvorzeichen der Impulse bei bipolaren Digitalsignalen zur Verringerung der Störempfindlichkeit bei.

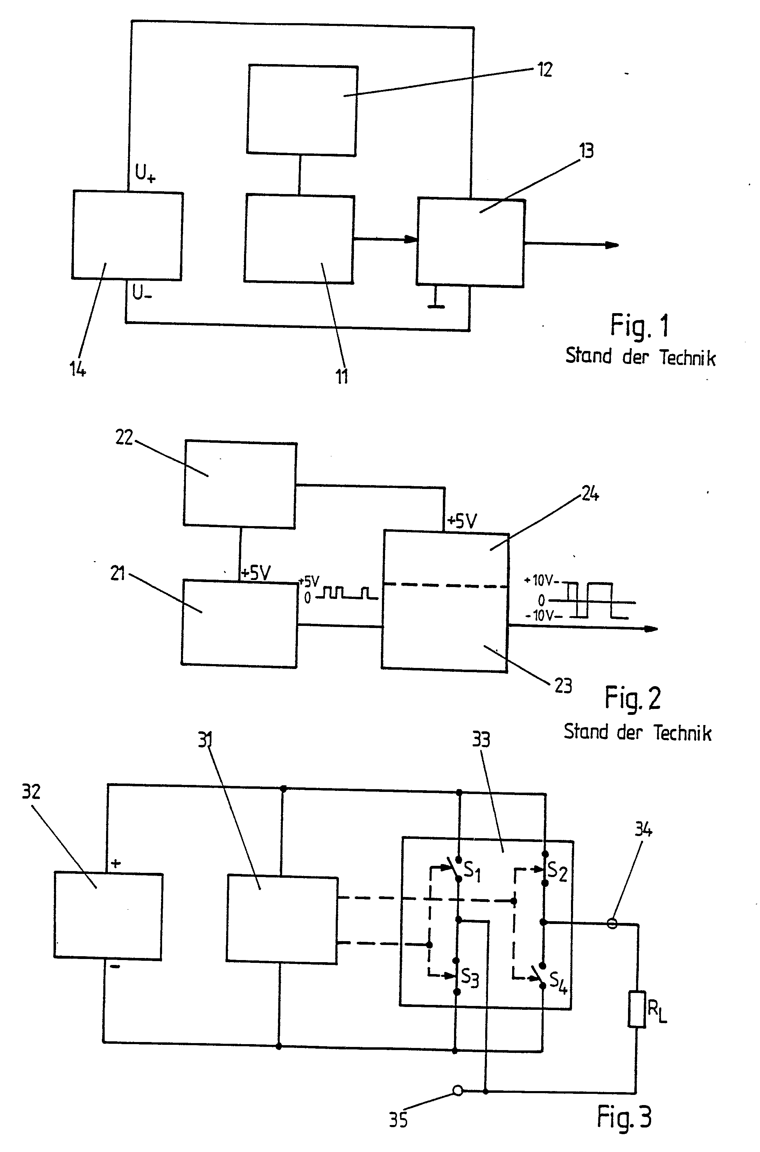

Aus dem Schaltungsbuch "Selected Interface Circuits Data Book for Design Engineers" der Firma Texas Instruments (European Semiconductor Group), 1982, Seite 411, ist eine Schaltungsanordnung bekannt, wie sie schematisch in Fig. 1 als Stand der Technik dargestellt ist. Die digitale Signalquelle 11 wird von einer unipolaren Spannungsquelle 12 gespeist und gibt das Ausgangssignal an eine Pegelumsetzer- oder Treiberschaltung 13 ab, die von einer externen bipolaren Betriebsspannungsquelle mit den Ausgangsspannungen U+ und U– gespeist wird. Das unipolare digitale Ausgangssignal der digitalen Signalquelle 11, die beispielsweise eine Datenübertragungsleitung sein kann, wird in der Pegelumsetzerschaltung 13 in ein bipolares digitales Signal umgesetzt. Schaltungen dieser Art benötigen, wie erwähnt, sowohl eine unipolare Spannungsquelle als auch eine externe bipolare Betriebsspannungsquelle, wodurch der Schaltungsaufwand hoch ist.

Aus einem Prospekt der Firma Spezial-Electronic für einen V24-Sender/Empfänger mit der Bezeichnung MAX232 der Firma MAXIM ist eine Schaltungsanordnung zur Erzeugung bipolarer digitaler Datensignale bekannt, wie sie in Fig. 2 als Stand der Technik schematisch dargestellt ist. Eine digitale Signalquelle 21, die von einer unipolaren Spannungsquelle 22 gespeist wird, gibt ein unipolares Digitalsignal an eine Pegelumsetzer- oder Treiberschaltung 23 ab, die einen Spannungswandler 24 einschließt. Die für die Versorgung der digitalen Signalquelle 21 vorgesehene unipolare Spannungsquelle 22 stellt auch die Versorgungsspannung für die Pegelumsetzer-Schaltung 23 bereit, in der das von der Digitalsignalquelle 21 kommende, unipolare digitale Eingangssignal in ein bipolares digitales Signal umgesetzt wird. Gegenüber der zuvor beschriebenen Schaltungsanordnung weist die bekannte Schaltungsanordnung gemäß Fig. 2 den Vorteil auf, daß keine externe bipolare Spannungsquelle erforderlich ist, da die unipolare Spannungsquelle für die digitale Signalquelle zugleich als Versorgung der Pegelumsetzerschaltung dient. Dadurch wird der schaltungstechnische Aufwand reduziert. Aufgrund des erforderlichen Spannungswandlers im Pegelumsetzer ist jedoch auch diese Schaltungsanordnung nach wie vor aufwendig.

Der Erfindung liegt daher die Aufgabe zugrunde, eine Schaltungsanordnung zu schaffen, die bipolare digitale Datensignale aus unipolaren digitalen Datensignalen mit einfachstem - schaltungstechnischen Aufwand erzeugt.

Ausgehend von der in Fig. 2 dargestellten, bekannten Schaltungsanordnung wird diese Aufgabe erfindungsgemäß dadurch gelöst, daß eine Schalter aufweisende Schalterkombination vorgesehen ist, die in Abhängigkeit vom Ausgangssignal der digitalen Signalquelle je nachdem, ob am Ausgang der Schaltungsanordnung eine positive oder negative Ausgangsspannung auftreten soll, den Ausgang der Schaltungsanordnung mit dem positiven oder mit dem negativen Anschluß der unipolaren Spannungsquelle verbindet.

Gegenüber den herkömmlichen Schaltungsanordnungen zur Erzeugung bipolarer digitaler Datensignale aus unipolaren digitalen Datensignalen ist der Bauteileaufwand wesentlich geringer. Ein weiterer Vorteil besteht auch darin, daß bei der erfindungsgemäßen Schaltungsanordnung die Verlustleistung kleiner als bei herkömmlichen Schaltungen ist.

Gemäß einer besonders vorteilhaften Ausgestaltung der Erfindung besteht die Schalterkombination aus Invertern. Dadurch können handelsübliche, kostengünstige Logikbausteine für die Schalterkombination verwendet werden, so daß sich zumindest für kleine Leistungen im Milliwatt-Bereich eine sehr wirtschaftliche Lösung ergibt.

Vorzugsweise sind die Inverter CMOS-Inverter. Dadurch kann die Verlustleistung weiter verringert werden.

Insbesondere dann, wenn die Schaltungsanordnung für große Leistungen ausgelegt sein soll, bei denen normale Inverter nicht mehr eingesetzt werden können, ist es gemäß einer weiteren Ausgestaltung der Erfindung besonders vorteilhaft, wenn die Schalterkombination durch selbstsperrende p- bzw. n-Kanal-MOS-Feldeffekttransistoren gebildet ist. Durch diese Ausgestaltung ist die erfindungsgemäße Schaltungsanordnung für sehr viel größere Leistungen einsetzbar als dies mit normalen Invertern möglich ist.

Die erfindungsgemäße Schaltungsanordnung ist insbesondere dann von großem Vorteil, wenn die digitale Signalquelle ein optischer Empfänger ist. In diesem Falle ist die galvanische Trennung der unipolaren Spannungsquelle vom Bezugspotential durch die optische Übertragungsstrecke gegeben, ohne daß eine galvanische Trennung für diesen Zweck vorgenommen werden müßte. Die erfindungsgemäße Schaltung ist jedoch auch bei üblichen Rechnerplatinen anwendbar, wobei dann jedoch die galvanische Trennung auf den Rechnerplatinen durchgeführt werden muß.

Die Erfindung wird nachstehend anhand der Zeichnungen beispielsweise näher erläutert. Es zeigen:

Fig. 1 eine bekannte Schaltungsanordnung in schematischer Darstellung,

Fig. 2 eine weitere bekannte Schaltungsanordnung in schematischer Darstellung,

Fig. 3 eine Ausführungsform der erfindungsgemäßen Schaltungsanordnung in schematischer, prinzipieller Darstellung,

Fig. 4 eine Ausführungsform der in Fig. 3 - schematisch dargestellten Schalterkombination,

Fig. 5 eine weitere Ausführungsform der in Fig. 3 dargestellten Schalterkombination und

Fig. 6 die Verwendung einer Ausführungsform der Erfindung im Zusammenhang mit einem optischen Übertragungssystem unter Verwendung einer V24-Schnittstelle.

Die in Fig. 3 wiedergegebene Prinzipdarstellung der erfindungsgemäßen Schaltungsanordnung weist eine digitale Signalquelle 31, beispielsweise einen optischen Empfänger eines optischen Übertragungssystems, auf, die von einer vom Bezugspotential galvanisch getrennten unipolaren Spannungsquelle 41 gespeist wird. Anhand der in Fig. 3 dargestellten Schalterkombination mit den Schaltern $S_1$, $S_2$, $S_3$ und $S_4$ soll die prinzipielle Funktionsweise der erfindungsgemäßen Schaltung nachfolgend erläutert werden.

Die Schalter $S_1$ und $S_3$ liegen in Reihe zwischen den Anschlüssen der unipolaren Spannungsquelle 32. Parallel zu den Schaltern $S_1$ und $S_3$ liegen die miteinander in Reihe liegenden Schalter $S_2$ und $S_4$ der Schalterkombination 33 ebenfalls zwischen den Anschlüssen der unipolaren Spannungsquelle 32. Der Verbindungspunkt der Schalter $S_1$ und $S_3$ ist mit einem Anschluß eines Lastwiderstandes $R_L$ und der Verbindungspunkt der Schalter $S_2$ und $S_4$ ist mit dem anderen Anschluß des Lastwiderstandes $R_L$ verbunden und stellt den Ausgang der Schaltungsanordnung dar.

Mit gestrichelten Linien ist eine Verbindung des Ausgangs bzw. der Ausgänge der digitalen Signalquelle 31 für die Schaltung der Schalter $S_1$ bis $S_4$ angedeutet.

Die Schaltungsanordnung arbeitet folgendermaßen:

Bei den dargestellten Schalterstellungen fließt ein Strom vom positiven Ausgang über den Schalter $S_2$ an den Lastwiderstand $R_L$ und weiter über diesen und über den Schalter $S_3$ zum negativen Ausgang der unipolaren Spannungsquelle 32. Am Ausgang 34 der Schaltung liegt in der in Fig. 3 dargestellten Schalterstellung also eine positive Ausgangsspannung an. Das heißt, in diesem Falle wird die Schalterkombination 33 vom Ausgangssignal der digitalen Signalquelle 31 so gesteuert, daß die Schalter $S_1$ und $S_4$ nicht leitend und die Schalter $S_2$ und $S_3$ leitend sind.

Soll dagegen am Ausgang 34 und damit am Lastwiderstand $R_L$ eine negative Spannung auftreten, so werden von den Ausgangssignalen der Digitalsignalquelle genau umgekehrt wie im vorausgegangenen Fall die Schalter $S_1$ und $S_4$ in den leitenden und die Schalter $S_2$ und $S_3$ in den nicht leitenden Zustand versetzt, so daß ein Strom in umgekehrter Richtung vom positiven Ausgang der unipolaren Spannungsquelle 32 über den Schalter $S_1$, den Lastwiderstand $R_L$ und den Schalter $S_4$ zum negativen Ausgang der unipolaren Spannungsquelle 32 fließt.

Das heißt, am Ausgang 34 der Schaltungsanordnung liegt eine negative Ausgangsspannung an.

Ersichtlich ist die erfindungsgemäße Schaltungsanordnung bei Verwendung einfachster Mittel in der Lage, aus unipolaren digitalen Datensignalen bipolare digitale Datensignale zu erzeugen, ohne daß hierfür schaltungsaufwendige Pegelumsetzer - Schaltungen oder Spannungswandler erforderlich sind.

Wenn einer der Anschlüsse des Lastwiderstandes $R_L$, etwa der mit dem Verbindungspunkt der Schalter $S_1$ und $S_3$ verbundene Anschluß des Lastwiderstandes $R_L$ etwa über einen Anschluß 35 mit einem Bezugspotential, beispielsweise mit 0 Volt beaufschlagt wird, ergeben sich am Ausgang 34 der Schaltungsanordnung die bipolaren digitalen Impulse aufgrund der Tatsache, daß die unipolare Spannungsquelle 32 vom Bezugspotential galvanisch getrennt ist.

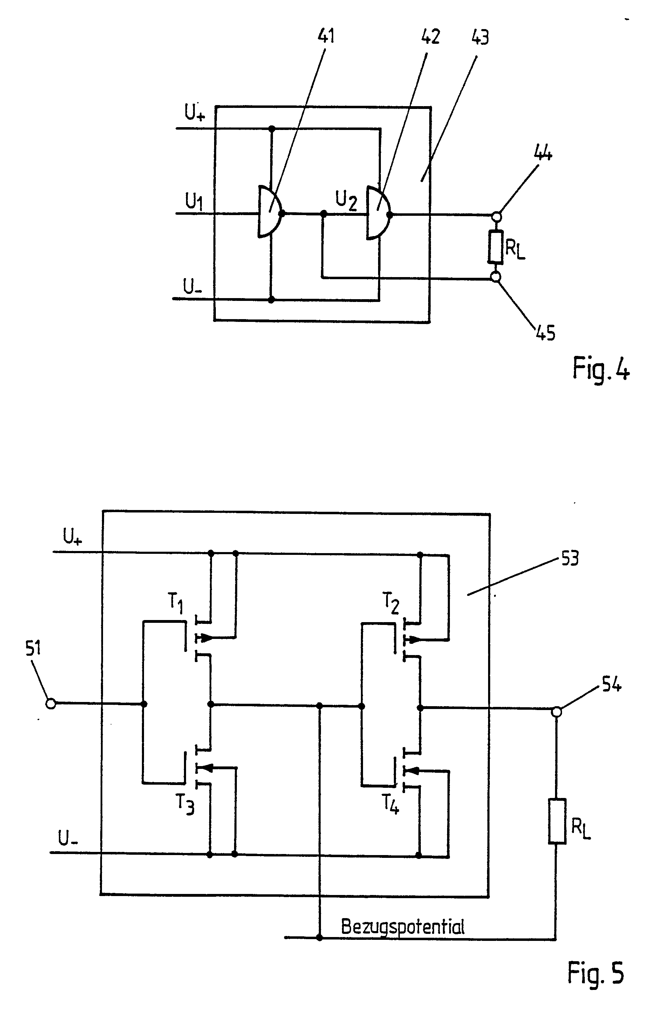

Eine besondere Ausführungsform der in Fig. 3 in prinzipieller Darstellung widergegebenen Schalterkombination 33 ist in Fig. 4 dargestellt. Zwei Inverter 41 und 42 sind in Reihe verbunden und liegen bezüglich der Ausgänge der unipolaren Spannungsquelle U+ und U- parallel zueinander. Das Ausgangssignal einer nicht dargestellten digitalen Signalquelle gelangt als Eingangssignal $U_1$ an den Inverter 41, dessen Ausgang mit dem Eingang des zweiten Inverters 42 und mit einem Anschluß des Lastwiderstands $R_L$ verbunden ist. Das Ausgangssignal des zweiten Inverters 42, das auch das Ausgangssignal der Schaltungsanordnung ist, gelangt über den Ausgang 44 an den anderen Eingang des Lastwiderstands $R_L$.

Liegt am Eingang des Inverters 41 ein niederpegeliger Spannungsimpuls an, fließt vom positiven Ausgang $U_+$ der unipolaren Spannungsquelle Strom über den ersten Inverter 41, den Lastwiderstand $R_L$ und - weil am Eingang des zweiten Inverters 42 das invertierte Eingangssignal $U_2$; also ein hochpegeliger Spannungswert anliegt -über den zweiten Inverter 42 zum negativen Ausgang $U_-$ der unipolaren Spannungsquelle. Am Ausgang 44 der Schaltungsanordnung tritt also ein negativer Impuls auf. Liegt am Eingang des ersten Inverters 41 dagegen ein hochpegeliger Wert des unipolaren Digitalsignals an, fließt Strom vom positiven Ausgang der unipolaren Spannungsquelle über den zweiten Inverter 42 - auf Grund der Inversion durch den ersten Inverter 41 liegt am Eingang des zweiten Inverters 42 ein niederpegeliger Wert an -, und weiter über den Lastwiderstand $R_L$ und den ersten Inverter 41 an den negativen Ausgang der unipolaren Spannungsquelle.

Die beiden Anschlüsse des in dieser Prinzip-Darstellung angegebenen Lastwiderstands $R_L$ können zum Beispiel die beiden Anschlüsse TXD und SGND einer genormten V24-Schnittstelle sein.

Die dargestellte Ausführungsform der Schalterkombination 43 mit Invertern bietet eine besonders kostengünstige Anordnung für kleine Leistungen im Milliwatt-Bereich. Durch Verwendung von CMOS-Invertern läßt sich die Verlustleistung darüber hinaus wesentlich verringern.

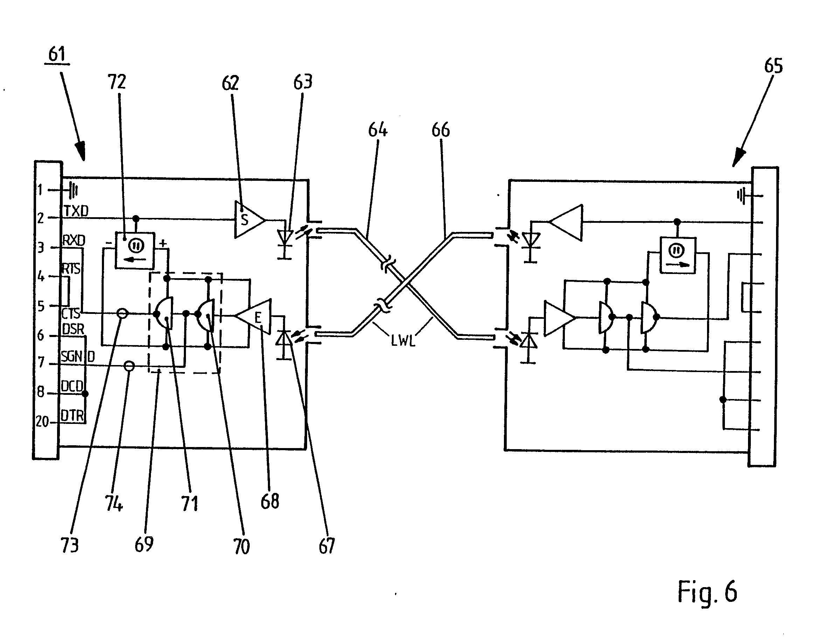

Eine weitere Ausführungsform der in Fig. 3 - schematisch dargestellten Schalterkombination 33 ist in Fig. 5 dargestellt. Der in Fig. 4 dargestellte erste Inverter 41 wird beim Ausführungsbeispiel gemäß Fig. 5 durch einen selbstsperrenden p-Kanal-MOS-Feldeffekttransistor $T_1$ und einen selbstsperrenden n-Kanal-MOS-Feldeffekttransistor $T_3$ gebildet. Die Drain-Anschlüsse der Transistoren $T_1$ und $T_3$ sind miteinander verbunden und bilden den Ausgang des auf diese Weise ausgebildeten Inverters. Dieser Ausgang ist mit den jeweiligen Gate-Zonen eines weiteren selbstsperrenden p-Kanal-MOS-Feldeffekttransistors $T_2$ und eines weiteren selbstsperrenden n-Kanal-MOS-Feldeffekttransistors $T_4$ verbunden, die dem zweiten Inverter der in Fig. 4 dargestellten Schaltungsanordnung entsprechen. Die Drain-Anschlüsse der letztgenannten Transistoren $T_2$ und $T_4$ sind miteinander verbunden und bilden den Ausgang der gesamten Schaltungsanordnung, an dem ein Lastwiderstand $R_L$ liegt, der mit seinem anderen Anschluß am Verbindungspunkt der Drain-Anschlüsse der Transistoren $T_1$ und $T_3$ einerseits und der Gate-Anschlüsse der Transistoren $T_2$, $T_4$ andererseits anliegt. Die Source-Anschlüsse der Transistoren $T_1$ und $T_2$ sind mit dem positiven Ausgang $U_+$ der (nicht dargestellten) unipolaren Spannungsquelle und die Source-Anschlüsse der Transistoren $T_3$ und $T_4$ sind mit dem negativen Ausgang $U_-$ der unipolaren Spannungsquelle verbunden. An den miteinander verbundenen Gate-Anschlüssen der Transistoren $T_1$ und $T_3$ liegt das von der Digitalsignalquelle bereitgestellte unipolare Digitalsignal an.

Bei Auftreten eines unipolaren Digitalsignals mit niederem Spannungswert (L-Signal) am Eingang 51 der in Fig. 5 dargestellten Schalterkombination ist der Transistor $T_3$ gesperrt und am gemeinsamen Ausgang der Transistoren $T_1$ und $T_3$, also an den miteinander verbundenen Drain-Anschlüssen liegt die positive Ausgangsspannung $U_+$ der unipolaren Spannungsquelle an. Dieses positive Signal tritt daher auch am einen Anschluß des Lastwiderstands $R_L$ und an den miteinander verbundenen Gate-Anschlüssen der Transistoren $T_2$ und $T_4$ auf, so daß der Transistor $T_2$ in den nicht leitenden und der Transistor $T_4$ in den leitenden Zustand gebracht wird. Am Ausgang der Schaltung 53 liegt daher die negative Ausgangsspannung $U_-$ der unipolaren Spannungsquelle an. Wenn ein Impuls mit hohem Spannungswert am Eingang 51 der Schalterkombination auftritt, kehren sich die Verhältnisse um. Der Transistor $T_1$ wird in den nicht leitenden und der Transistor $T_3$ in den leitenden Zustand versetzt, so daß am einen, dem Anschluß 54 abgewandten Ende des Lastwiderstands $R_L$ und damit auch an den miteinander verbundenen Gate-Anschlüssen der Transistoren $T_2$ und $T_4$ die komplementäre Spannung der unipolaren Spannungsquelle anliegt. Dadurch wird der Transistor $T_2$ in den leitenden und der Transistor $T_4$ in den nicht leitenden Zustand versetzt, so daß am Ausgang 54 der Schalterkombination und damit am oberen Anschluß des Lastwiderstandes $R_L$ die positive Ausgangsspannung der unipolaren Spannungsquelle anliegt.

Die Schalter $S_1$ und $S_2$ werden bei dieser Ausführungsform also durch die selbstsperrenden p-Kanal-MOS-Feldeffekttransistoren $T_1$ und $T_2$ gebildet und entsprechen diesen, wogegen die Schalter $S_3$ und $S_4$ von Fig. 3 den selbstsperrenden n-Kanal-MOS-Feldeffekttransistor $T_3$ und $T_4$ in Fig. 5 entsprechen. Vergleicht man die in Fig. 5 dargestellte Schaltung mit der in Fig. 4 dargestellten Ausführungsform, so ergibt sich, daß die Transistoren $T_1$ und $T_3$ von Fig. 5 dem ersten Inverter 41 von Fig. 4 und die Transistoren $T_2$ und $T_4$ von Fig. 5 dem zweiten Inverter 42 von Fig. 4 entsprechen. Da die an den gemeinsamen Gate-Anschlüssen der Transistoren $T_2$ und $T_4$ anliegende Spannung entsprechend der Eingangsspannung $U_2$ des zweiten Inverters 42 in Fig. 4 die gegenphasige Spannung ist, die von der Digitalsignalquelle bereitgestellt wird und am Eingang 51 anliegt, braucht die digitale Signalquelle lediglich einen Ausgang aufzuweisen.

Durch die Verwendung komplementärer Feldeffekttransistoren für die in Fig. 5 dargestellte Schalterkombination ist die Schaltungsanordnung für sehr viel größere Leistungen vorgesehen, als dies mit normalen Invertern möglich ist.

Ein Anwendungsbeispiel der erfindungsgemäßen Schaltungsanordnung wird im Zusammenhang mit einem optischen Übertragungssystem mit V24-Schnittstellen gemäß Fig. 6 nachfolgend erläutert.

Ein am Anschluß 2 anliegendes digitales, zu übertragendes Datensignal wird in einem Sendeverstärker 62 verstärkt und in einem elektro-optischen Wandler 63 in ein optisches Signal umgesetzt, das über einen Lichtwellenleiter 64 an eine zweite V24-Schnittstelle 65 übertragen wird. Da die zweite V24-Schnittstelle 65 in derselben Weise aufgebaut ist wie die erste V24-Schnittstelle 61 und die dargestellten Schaltungselemente identisch sind, wird auf die Beschreibung der zweiten V24-Schnittstelle 62 verzichtet.

Vom entsprechenden elektro-optischen Wandler der zweiten V24-Schnittstelle 65 gelangt ein optisches Signal in entsprechender Weise über einen Lichtwellenleiter 66 an einen opto-elektronischen Wandler 67 der ersten V24-Schnittstelle 61 und das elektrische Ausgangssignal wird in einem Eingangsverstärker 68 verstärkt. Der aus dem opto-elektrischen Wandler 67 und dem Verstärker 68 bestehende optische Empfänger ist bei dieser Anwendungsform der erfindungsgemäßen Schaltungsanordnung die digitale, unipolare Signalquelle, die das unipolare Digitalsignal an die Schalterkombination 69 abgibt, die gemäß der in Fig. 4 dargestellten Ausführungsform aus zwei hintereinander geschalteten Invertern 70 und 71 besteht. Die Schalterkombination ist mit einer unipolaren Spannungsquelle 72 verbunden, die im vorliegenden Fall ein Spannungswandler ist, der eine vom Bezugspotential (Anschluß 7) galvanisch getrennte Spannung liefert. Die benötigte Energie wird am Anschluß 2 bereitgestellt. Die Ausgänge 73 und 74 der Schalterkombination 79 entsprechen den Ausgängen 34 und 35 in Fig. 3 und den Ausgängen 44 und 45 in Fig. 4. Diese Ausgänge 73 und 74 sind an die Anschlüsse 3 (RXD) und 7 (SGND) geführt. Zwischen den Ausgängen 3 und 7 befindet sich die in den Fig. 3 und 4 dargestellte Last $R_L$. Dem Anschluß 7 wird das Bezugspotential, beispielsweise die Spannung Null Volt aufgeprägt. Dies ist möglich, weil die unipolare Spannungsquelle 72 vom Bezugspotential galvanisch getrennt ist. Die galvanische Trennung wird im dargestellten Anwendungsbeispiel durch die optische Übertragungsstrecke nicht beeinflußt.

Wie zuvor beschrieben wurde, ergibt sich durch die erfindungsgemäße Schaltungsanordnung zur Erzeugung bipolarer digitaler Datensignale eine denkbar einfache Schaltungsbauweise mit geringem schaltungstechnischem Aufwand. Darüberhinaus ist die Verlustleistung bei Verwendung einer derartigen Schaltungsanordnung sehr gering.

Die Erfindung wirde anhand bevorzugter Ausführungsbeispiele dargestellt und erläutert. Dem Fachmann sind jedoch zahlreiche Ausgestaltungen und Abwandlungen möglich, ohne daß dadurch der Erfindungsgedanke verlassen wird. Beispielsweise ist die Verwendung der erfindungsgemäßen Schaltungsanordnung nicht nur im Zusammenhang mit elektro-optischen Übertragungssystemen, sondern auch auf Rechnerplatinen möglich, wobei jedoch eine entsprechende galvanische Trennung vorgesehen sein muß. Bei Verwendung der erfindungsgemäßen Schaltungsanordnung im Zusammenhang mit größeren Leistungen ist insbesondere die anhand von Fig. 5 beschriebene Ausführungsform der Schaltungsanordnung mit komplementären Feldeffekttransistoren vorteilhaft.

## Ansprüche

1. Schaltungsanordnung zur Erzeugung bipolarer digitaler Datensignale mit einer unipolaren, vom Bezugspotential galvanisch getrennten Spannungsquelle und einer von der unipolaren Spannungsquelle gespeisten, digitalen Signalquelle, dadurch gekennzeichnet, daß eine Schalter ($S_1$, $S_2$, $S_3$, $S_4$; 41, 42; $T_1$, $T_1$, $T_2$, $T_3$, $T_4$; 70, 71) aufweisende Schalterkombination (33; 43; 53; 69) vorgesehen ist, die in Abhängigkeit vom Ausgangssignal der digitalen Signalquelle (31; 67, 68) je nachdem, ob am Ausgang (34, 44, 54, 73) der Schaltungsanordnung ein positives oder negatives Ausgangssignal auftreten soll, diese mit dem positiven oder mit dem negativen Anschluß der unipolaren Spannungsquelle (32; 72) verbindet.

2. Schaltungsanordnung nach Anspruch 1, dadurch gekennzeichnet, daß die Schalterkombination (43) durch Inverter (41, 42) gebildet ist (Fig. 4).

3. Schaltungsanordnung nach Anspruch 1 oder 2, dadurch gekennzeichnet, daß die Inverter (41, 42) CMOS-Inverter sind.

4. Schaltungsanordnung nach einem der Ansprüche 1 bis 3, dadurch gekennzeichnet, daß die Schalterkombination (33, 43, 53) durch selbstsperrende p- bzw. n-Kanal-MOS-Feldeffekttransistoren ($T_1$, $T_3$, $T_4$) gebildet ist (Fig. 5).

5. Schaltungsanordnung nach einem der Ansprüche 1 bis 4, dadurch gekennzeichnet, daß die digitale Signalquelle (31) eine optoelektrische Empfängerschaltung (67, 68) ist (Fig. 6).

0 292 817

Fig. 1
Stand der Technik

Fig. 2
Stand der Technik

Fig. 3

Fig. 4

Fig. 5

Bezugspotential

Fig. 6